# EUROPÄISCHE PATENTSCHRIFT

(11) **EP 0 519 118 B1**
(45) Veröffentlichungstag und Bekanntmachung des Hinweises auf die Patenterteilung: **14.09.1994**
(21) Anmeldenummer: 91119393.6
(22) Anmeldetag: 14.11.1991
(51) Int. Cl.: B23F 23/12, B24B 1/00

(54) **Verfahren und Vorrichtung zur Vermeidung von thermischen Überbeanspruchungen von Zahnrädern und dgl. Werkstücken beim Schleifen (Schleifbrand)**
Method and apparatus for avoiding thermal overstress on toothed gears and similar workpieces during grinding (overheating when grinding)
Méthode et dispositif pour éviter des surcharges thermiques sur des roues dentées et pièces similaires lors du meulage (surchauffe de meulage)

(30) Priorität: 17.06.1991 DE 4119871
(43) Veröffentlichungstag der Anmeldung: 23.12.1992
(73) Patentinhaber: Kapp GmbH & Co. KG Werkzeugmaschinenfabrik, D-96450 Coburg (DE)
(72) Erfinder: Lösch, Klaus, Dr. rer. nat., W-8630 Coburg (DE); Pickert, Werner, Dipl.-Ing., W-8630 Coburg (DE)
(74) Vertreter: Stenger, Watzke & Ring Patentanwälte

(56) Entgegenhaltungen:
- DD-A- 132 412
- GB-A- 827 528
- US-A- 2 326 368
- US-A- 4 833 836
- PATENT ABSTRACTS OF JAPAN vol. 8, no. 263 (M-342)(1700) 4. Dezember 1984 & JP-A-59134656 (TOSHIBA K.K.)

## Beschreibung

Die Erfindung betrifft ein Verfahren gemäß Oberbegriff von Patentanspruch 1 und eine Vorrichtung gemäß Oberbegriff von Patentanspruch 7 zur Vermeidung von thermischen Überbeanspruchungen von Zahnrädern und dgl. Werkstücken mit zahnradähnlichen Profilen, wie beispielsweise Schraubenverdichter-Rotoren, beim Schleifen (Schleifbrand); siehe US-A 4 833 836.

Bei der Fertigung qualitativ hochwertiger Bauteile, wie beispielsweise von Zahnrädern und anderen Werkstücken mit zahnradähnlichen Profilen, wird es immer wichtiger, zwecks Erlangung einer hohen Präzision und Formgenauigkeit nach der Vorbearbeitung und dem Härten eine Feinbearbeitung nachzuschalten. Als Hartbearbeitungsverfahren kommt dabei häufig das Schleifen zum Einsatz.

Hierbei wird ein Aufmaß, das sich einerseits aus der Vorbearbeitung vor dem Härten und andererseits aus Härteverzügen oder aber aus einer ungenauen Positionierung des vorprofilierten Werkstücks in der Schleifmaschine ergibt, abgetragen, das im Falle der Hartbearbeitung von Zahnrädern meistens zwischen 1/10 und 3/10 mm beträgt. Der Schleifvorgang soll durch das Abnehmen dieses Aufmaßes die endgültige Geometrie erzeugen, für die teilweise Formabweichungen von nur wenigen Mikrometern zulässig sind, vor allem bei Verzahnungen und sonstigen Profilen im Flugzeugbau. Andererseits erfordern Wirtschaftlichkeitsüberlegungen, daß die Hart- bzw. Feinbearbeitung in möglichst kurzer Zeit vorgenommen wird, um einen maximalen Werkstückausstoß pro Maschine und pro Zeiteinheit zu erreichen.

Diese beiden gegenläufigen Forderungen - einerseits hohe Genauigkeit und andererseits viel Materialabtrag pro Zeiteinheit - haben in der Vergangenheit zur Entwicklung leistungsfähiger Schleifverfahren geführt, wobei neben konventionellen Schleifstoffen (Siliziumkarbid, Edelkorund usw.) auch Diamanten und kubisch-kristallines Bornitrid (CBN) zum Einsatz kommen.

In der Praxis der Großserienfertigung wird der Feinbearbeitungsvorgang mit hohen bezogenen Zeitspanvolumina, d.h. mit einer Maximalzahl abgenommener Kubikmillimeter Aufmaß pro Sekunde Schleifzeit und pro Millimeter Schleifscheibenbreite, durchgeführt. Insbesondere beim Einsatz von kubisch-kristallinem Bornitrid (CBN) sind hohe Zahlenwerte für das bezogene Zeitspanvolumen möglich. Anhaltswerte für ein maximales Zeitspanvolumen und damit für die Optimierung des Schleifvorganges in wirtschaftlicher Hinsicht liefert die Praxis.

Die Grenze der Optimierungsfähigkeit ist jedoch dort erreicht, wo mit so hohen Vorschüben und/oder Zustellungen geschliffen wird, daß die Schleifscheibe an der Kontaktfläche zum Werkstück lokal derart hohe Temperaturen erzeugt, daß thermische Gefügeveränderungen in der Werkstückrandschicht auftreten. Der Fachmann spricht hier von Schleifbrand oder Heißbrand und versteht darunter eine thermische Schädigung des Werkstückes, so daß dieses Ausschuß wird.

Für die industrielle Produktion von Zahnrädern besitzt daher ein stabiler Fertigungsprozeß ohne Auftreten von Schleifbrand einen hohen Stellenwert. In der Praxis der Zahnradherstellung hat sich insbesondere bei der Massenfertigung von Zahnrädern jedoch gezeigt, daß es gegenwärtig keine Hartbearbeitungsverfahren für Zahnräder gibt, die bei hoher wirtschaftlicher Leistungsfähigkeit gleichzeitig Schleifbrandfreiheit garantieren.

Bei der Großserienfertigung von Zahnrädern werden daher sogenannte Nitalätzverfahren eingesetzt, um stichprobenartig Werkstücke auf Schleifbrandschädigung zu prüfen. Dabei werden in verschiedenen Bädern Ätzungen vorgenommen, um daraus eine ggf. auftretende Änderung der Randschichten des Gefüges sichtbar zu machen. Diese Ätzverfahren sind jedoch relativ aufwendig und ermöglichen keine 100 %ige Prüfung der geschliffenen Werkstücke. Ferner sind sie kosten- und zeitintensiv. Mit ihnen kann in jedem Fall nur eine nachträgliche Prüfung erfolgen, um Ausschußteile von Gutteilen zu trennen; zu diesem Zeitpunkt hat der Hartbearbeitungsprozeß jedoch schon stattgefunden, und es liegt ggf. Ausschuß vor. Heutige Praxis ist also stets nur "Schadenserkennung", aber keine "Schadensvermeidung".

Untersuchungen haben gezeigt, daß Schleifbrand dann auftritt, wenn beim Schleifen mit einem zu hohen bezogenen Zeitspanvolumen gearbeitet wird; es wird dann also pro Sekunde Schleifzeit und pro Millimeter Schleifscheibenbreite ein zu hoher Zahlenwert an Kubikmillimetern Aufmaß abgenommen. Der Wert für das bezogene Zeitspanvolumen ergibt sich auch, wenn man die Schleifzustellung mit dem Vorschub des Schleifwerkzeuges relativ zum Werkstück multipliziert.

Am Markt sind heute Hochleistungsschleifwerkzeuge verfügbar, mit denen es möglich ist, über eine gewisse Standmenge bzw. Standzeit einen definierten Wert für das bezogene Zeitspanvolumen zu erreichen, ohne daß Schleifbrand auftritt. Nach obiger Definition des bezogenen Zeitspanvolumens entscheiden mithin zwei Parameter über eine einwandfreie Hartbearbeitung ohne Schleifbrandschädigung: Zum einen ist dies der in der Schleifmaschine eingestellte Vorschub und zum anderen das effektiv vorhandene Werkstückaufmaß (Schleifzugabe), das, wie oben bereits dargestellt, von der Vorbearbeitung des Werkstücks, von den Härteverzügen und/oder von der Werkstückpositionierung bestimmt wird. Diese Aussagen treffen zumindest für das Vollformschleifen zu, bei dem mit einem oder mit einigen wenigen Schleifhüben das gesamte Schleifaufmaß abgetragen wird. Dieses Schleifverfahren wird heute üblicherweise in der Großserienfertigung von Zahnrädern eingesetzt. Im Prinzip gelten diese Aussagen aber für jede andere Art der Hartfeinbearbeitung.

In der Praxis hat sich herausgestellt, daß eine wirtschaftliche und technisch einwandfreie Schleifbearbeitung erzielt werden kann, wenn beim Einsatz von Qualitätswerkzeugen und optimierten Vorschüben in der Schleifmaschine Werkstücke bearbeitet werden, deren Aufmaß innerhalb einer vorgegebenen Toleranz bleibt. Probleme mit Schleifbrand können aber dann auftreten, wenn unversehens starke Aufmaßschwankungen nach oben stattfinden und diese das Schleifwerkzeug über Gebühr belasten. Diese Aufmaßschwankungen können dadurch zustande kommen, daß eine andere Charge Werkstücke zu schleifen ist, bei der eine zu ungenaue Vorbearbeitung und/oder zu hohe Härteverzüge stattfanden.

Der Erfindung liegt die **Aufgabe** zugrunde, ein Verfahren zur Vermeidung von Schleifbrand, d.h. von thermischen Überbeanspruchungen eines Werkstückes beim Schleifen zu schaffen, das sich dadurch auszeichnet, daß es einfach anwendbar ist und im kritischen Fall noch vor der Schleifoperation die den Schleifvorgang bestimmenden Parameter so verändert, daß die zu bearbeitenden Teile Gutteile werden.

Die **Lösung** dieser Aufgabenstellung durch die Erfindung ist verfahrensmäßig dadurch gekennzeichnet, daß unter Zugrundelegung eines zulässigen bezogenen Zeitspanvolumens des Schleifwerkzeugs mit dem ermittelten maximalen Schleifaufmaß ein zulässiger Wert für den Vorschub des Schleifwerkzeugs berechnet und dieser der Maschinensteuerung vorgegeben wird.

Mit der in der Maschine durchgeführten, ggf. automatisierten Profilprüfung des noch ungeschliffenen Zahnrades mit einem Tastorgan liegen bei Registrierung der Abweichungen vom Idealprofil alle Informationen vor, um auf das effektiv abzunehmende Aufmaß zu schließen. In diesen Abschliffbetrag gehen die Rundlauffehler, die Vorbearbeitungsfehler, die Planlauffehler und die Ausrichtfehler des Werkstücks mit ein. Die Division des so ermittelten Abschliffbetrages durch das zulässige bezogene Zeitspanvolumen liefert den Vorschub, mit dem ohne Gefahr einer Schleifbrandschädigung gearbeitet werden kann. Die Berechnung eines optimalen zulässigen Vorschubwertes kann wahlweise für ein komplettes Werkstück oder für eine einzelne zu schleifende Zahnlücke erfolgen. Wenn das erfindungsgemäße Verfahren beim Schleifen in Paketspannung (mehrere gleiche Zahnräder nebeneinander auf einem Hydrospanndorn gespannt) eingesetzt wird, ist die Profilprüfung für jedes einzelne der zu schleifenden Zahnräder durchzuführen. Maßgeblich ist dann das größte aller ermittelten Aufmaße unter Berücksichtigung einer ggf. vorhandenen Winkelverschiebung zwischen den einzelnen zu bearbeitenden Zahnrädern.

Insbesondere bei der Großserienfertigung von Zahnrädern wird zwecks Effizienzsteigerung des Schleifprozesses eine sogenannte Schnittaufteilung durchgeführt. Der abzutragende Abschliffbetrag wird dabei beispielsweise in zwei Teilarbeitsgängen abgenommen. Der erste Arbeitsgang - das sogenannte Schruppschleifen - dient dann als Vorschleifoperation und nimmt ca. 2/3 des abzutragenden Abschliffbetrages ab. Der zweite Teilarbeitsgang - das sogenannte Schlichtschleifen - liefert die endgültige Form und nimmt das letzte Drittel des Abschliffbetrages ab. Dabei werden für das Schrupp- und das Schlichtschleifen unterschiedliche Schleifwerkzeuge eingesetzt: Die Schruppschleifscheibe arbeitet mit Schleifpartikeln größeren Korndurchmessers und ist in der Lage, höhere bezogene Zeitspanvolumina zu erreichen als ein Schleifmittel mit kleinerer Körnung. Dieses wird für das Schlichtschleifen eingesetzt, wobei bei geringeren bezogenen Zeitspanvolumina eine höhere Oberflächengüte erreicht wird.

Beim Hartfeinbearbeiten mit Schnittaufteilung müssen jedoch Schrupp- und Schlichtwerkzeug genau aufeinander abgestimmt werden, um die volle Leistungsfähigkeit des Fertigungsverfahrens zu erreichen. Durch Verschleiß, insbesondere des Schruppwerkzeuges, kann es jedoch passieren, daß ein zu geringer Abschliffbetrag im Schrupparbeitsgang abgenommen wird und somit ein zu großer Restabschliffbetrag für das Schlichtschleifen übrigbleibt. Dies führt zu einer erhöhten Belastung des Schlichtwerkzeugs und damit möglicherweise zu Schleifbrand.

Nach einem weiteren Merkmal der Erfindung wird dies Problem dadurch behoben, daß in regelmäßigen Abständen (z.B. nach jeweils 100 geschliffenen Werkstücken) die Profilprüfung mit dem Tastorgan nach Durchführung des ersten Arbeitsganges (Schrupparbeitsgang) und vor dem letzten Arbeitsgang (Schlichtschleifen) durchgeführt wird. Durch Auswertung dieser Prüfung ist es möglich, auf die Größe des für den Schlichtarbeitsgang verbleibenden Abschliffbetrages zu schließen und dann ggf. rechtzeitig den Vorschub für das Schlichten zu reduzieren, so daß keine Schleifbrandschädigung auftritt.

Das erfindungsgemäße Verfahren eignet sich grundsätzlich auch dann, wenn keine Stirnzahnräder mit Evolventenprofil, sondern Werkstücke mit einem anderen zahnradähnlichen Profil zu schleifen sind.

Eine bevorzugte Weiterbildung des erfindungsgemäßen Verfahrens besteht darin, daß das durch die Profilprüfung gewonnene und berechnete effektive Schleifaufmaß für jede zu bearbeitende Profillücke separat bestimmt und in einem Computer gespeichert wird und daß unter Zugrundelegung des zulässigen bezogenen Zeitspanvolumens des Schleifwerkzeugs mit den ermittelten effektiven Schleifaufmaßen in einer jeden Profillücke ein zulässiger Wert für den Vorschub des Schleifwerkzeugs beim Schleifen dieser Profillücke berechnet und diese Werte der Maschinensteuerung vorgegeben werden. Das erfindungsgemäße Verfahren läßt sich somit nicht nur werkstückweise, sondern auch für jedes einzelne zu schleifende Profil eines Werkstückes, beispielsweise für jede Zahnlücke eines Zahnrades anwenden.

Als Tastorgan für die Profilprüfung können ein mechanischer Meßtaster, ein optisches Meßelement oder ein induktiv arbeitendes Meßorgan eingesetzt werden, wie sie beispielsweise auch bei einer, diesem Verfahren vorausgehenden Aufmaßvermittlung (stock dividing) zum Einsatz kommen. Bevorzugt kann als Tastorgan für die Profilprüfung auch ein dem zu bearbeitenden Werkstück zugehöriges Meisterritzel eingesetzt werden, mit dem das effektive Schleifaufmaß durch eine Zweiflankenwälzprüfung bestimmt wird.

Mit der Erfindung wird schließlich vorgeschlagen, im Falle einer dem Schleifprozeß vorausgehenden Aufmaßvermittlung (stock dividing) die hierbei gewonnenen Meßwerte zu verwenden, um das effektiv abzunehmende Schleifaufmaß zu berechnen. Hierdurch kann auf zusätzliche Meßorgane und besondere Messungen verzichtet werden.

Die Erfindung betrifft weiterhin eine Vorrichtung zur Vermeidung von thermischen Überbeanspruchungen von Zahnrädern und dgl. Werkstücken mit zahnradähnlichen Profilen, wie beispielsweise Schraubenverdichter-Rotoren, beim Schleifen (Schleifbrand) durch Ermittlung eines Abschliffbetrages des Werkstückes in der Maschine, Berechnung eines zulässigen Vorschubwertes und Rückführung desselben in die Maschinensteuerung. Eine derartige Vorrichtung ist erfindungsgemäß gekennzeichnet durch ein Meisterritzel für eine Zweiflankenwälzprüfung des Werkstücks und rotatorische sowie translatorische Meßgeräte zur Messung der rotatorischen und translatorischen Abweichungen für die Ermittlung der effektiven Abschliffbeträge.

Gemäß einem weiteren Merkmal der Erfindung sind dabei Ausführungsformen denkbar, mittels derer der momentane Prozeßzustand visuell in einfacher Weise dem Bedienungspersonal der Schleifmaschine mitgeteilt wird. Liegt der mit der Zweiflankenwälzprüfung festgestellte Abschliffbetrag innerhalb der zulässigen Toleranz, kann mithin also mit dem regulär vorgesehenen Schleifwerkzeugvorschub gearbeitet werden, ohne Gefahr einer Schleifbrandschädigung zu laufen, kann dies mit einer beispielsweise grünen Leuchtdiode dem Bedienungspersonal mitgeteilt werden. Eine beispielsweise gelbe Leuchtdiode soll dann aufleuchten, wenn der durch die Zweiflankenwälzprüfung ermittelte Abschliffbetrag einen gewissen Prozentsatz über der zulässigen Toleranz liegt und somit eine Vorschubreduzierung notwendig wurde. Verläßt das festgestellte abzuschleifende Aufmaß auch diese Grenze, kann z.B. mittels einer roten Leuchtdiode angezeigt werden, daß extrem schlecht vorbearbeitete Zahnräder zu bearbeiten sind.

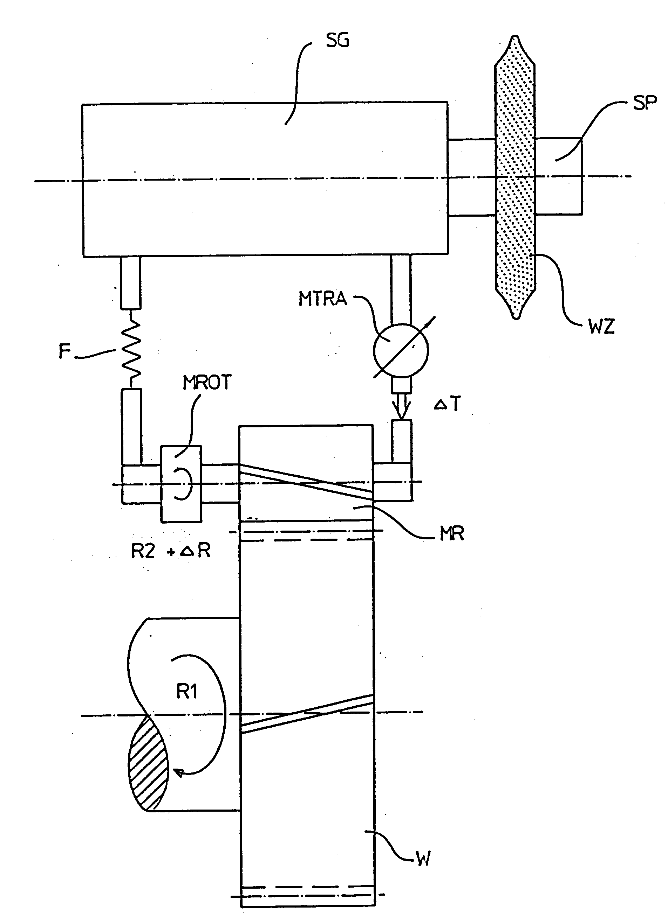

In der Zeichnung ist ein Ausführungsbeispiel der erfindungsgemäßen Vorrichtung schematisch dargestellt, anhand der auch das erfindungsgemäße Verfahren erläutert werden soll.

### Die Zeichnung zeigt die

Vorderansicht eines Werkstückes W in Form eines schrägverzahnten Stirnzahnrades. Dieses wird mit einem Schleifwerkzeug WZ bearbeitet, das auf einer Schleifspindel SP montiert ist, die in einem Spindelgehäuse SG gelagert ist, und die auch den Antrieb des Schleifwerkzeuges WZ bewirkt. Zur Bearbeitung wird die Spindel SP mit dem Werkzeug WZ auf den Schrägungswinkel der Verzahnung des Zahnrades W geschwenkt und in entsprechenden Eingriff gebracht.

In der Zeichnung ist jedoch schematisch diejenige Positionierung dargestellt, in der die Zweiflankenwälzprüfung durchgeführt wird. Hierzu wird ein Meisterritzel MR in Eingriff mit dem Werkstück W gebracht. Das Meisterritzel MR ist mit dem Spindelgehäuse SG verbunden; es wird jedoch mittels einer Feder F radial auf das Werkstück W gedrückt, um Formschluß im Sinne der Zweiflankenwälzprüfung zu garantieren.

Wird das Werkstück W nun angetrieben (Rotation R1), führt das Meisterritzel MR die Drehung R2 aus. Die Drehung des Meisterritzels MR wird hierbei über ein Drehwinkelmeßgerät MROT registriert. Die translatorische Bewegung der Achse des Meisterritzels MR in der Zeichnungsebene senkrecht zur Achse des Werkstücks W mißt ein Längenmeßgerät MTRA.

Abweichungen von der Idealverzahnungsgeometrie vor dem Schleifen, und hier insbesondere Aufmaßschwankungen, führen nun beim Drehen des Werkstücks W (R1) zu von den beiden Meßgeräten MROT und MTRA registrierten Abweichungen ΔR und ΔT. Die Auswertung der Zeitverläufe dieser beiden Abweichungen ( ΔR und ΔT) liefert den effektiven Abschliffbetrag, der durch den Schleifvorgang durch das Werkzeug WZ vom Werkstück W abzunehmen ist. Die Division des Maximalwertes des Abschliffbetrages durch das zulässige bezogene Zeitspanvolumen ergibt den zulässigen Wert für den Vorschub des Schleifwerkzeuges WZ, der der Maschinensteuerung zugeführt wird.

### Bezugszeichenliste:

- W: Werkstück
- WZ: Schleifwerkzeug
- SP: Schleifspindel
- MR: Meisterritzel
- SG: Spindelgehäuse
- F: Feder
- R1: Rotation des Werkstücks W
- R2: Rotation des Meisterritzels MR
- MROT: Drehwinkelmeßgerät
- MTRA: Längenmeßgerät
- ΔR: Drehwinkelabweichung des Meisterritzels MR
- ΔT: Translatorische Abweichung des Meisterritzels MR

## Patentansprüche

1. Verfahren zur Vermeidung von thermischen Überbeanspruchungen von Zahnrädern und dgl. Werkstücken mit zahnradähnlichen Profilen, wie beispielsweise Schraubenverdichter-Rotoren, beim Schleifen (Schleifbrand), wobei vor der Durchführung des Schleifprozesses in der Schleifmaschine mittels eines Tastorgans eine Profilprüfung am zu bearbeitenden Werkstück durchgeführt wird, deren Ergebnis in ein effektives maximales Schleifaufmaß umgerechnet wird,
**dadurch gekennzeichnet**,
daß unter Zugrundelegung eines zulässigen bezogenen Zeitspanvolumens des Schleifwerkzeugs mit dem ermittelten maximalen Schleifaufmaß ein zulässiger Wert für den Vorschub des Schleifwerkzeugs berechnet und dieser der Maschinensteuerung vorgegeben wird.

2. Verfahren nach Anspruch 1, dadurch gekennzeichnet, daß bei Aufteilung des Schleifprozesses, beispielsweise in einen Schrupp- und in einen Schlichtarbeitsgang, die Profilprüfung mit dem Tastorgan nach Ausführung des ersten Arbeitsganges (Schrupparbeitsgang) und vor dem letzten Arbeitsgang (Schlichtschleifen) durchgeführt wird und durch Auswertung dieser Prüfung die Größe des für den letzten Arbeitsgang verbleibenden Abschliffbetrages ermittelt wird und bei einem zu großen für den Schlichtarbeitsgang verbleibenden Abschliffbetrag der Vorschub für das Schlichtschleifen reduziert wird.

3. Verfahren nach Anspruch 1, dadurch gekennzeichnet, daß das durch die Profilprüfung gewonnene und berechnete effektive Schleifaufmaß für jede zu bearbeitende Profillücke separat bestimmt und in einem Computer gespeichert wird und daß unter Zugrundelegung des zulässigen bezogenen Zeitspanvolumens des Schleifwerkzeugs mit den ermittelten effektiven Schleifaufmaßen in einer jeden Profillücke ein zulässiger Wert für den Vorschub des Schleifwerkzeugs beim Schleifen dieser Profillücke berechnet und diese Werte der Maschinensteuerung vorgegeben werden.

4. Verfahren nach mindestens einem der Ansprüche 1 bis 3, dadurch gekennzeichnet, daß als Tastorgan für die Profilprüfung ein mechanischer Meßtaster, ein optisches Meßelement oder ein induktiv arbeitendes Meßorgan eingesetzt wird, wie es beispielsweise auch bei einer, diesem Verfahren vorausgehenden Aufmaßvermittlung (stock dividing) zum Einsatz kommt.

5. Verfahren nach einem der Ansprüche 1 bis 3, dadurch gekennzeichnet, daß als Tastorgan für die Profilprüfung ein dem zu bearbeitenden Werkstück zugehöriges Meisterritzel eingesetzt wird, mit dem das effektive Schleifaufmaß durch eine Zweiflankenwälzprüfung bestimmt wird.

6. Verfahren nach Anspruch 4, dadurch gekennzeichnet, daß im Falle einer dem Schleifprozeß vorausgehenden Aufmaßvermittlung (stock dividing) die hierbei gewonnenen Meßwerte verwendet werden, um das effektiv abzunehmende Schleifaufmaß zu berechnen.

7. Vorrichtung zur Vermeidung von thermischen Überbeanspruchungen von Zahnrädern und dgl. Werkstücken mit zahnradähnlichen Profilen, wie beispielsweise Schraubenverdichter-Rotoren, beim Schleifen (Schleifbrand) durch Ermittlung eines Abschliffbetrags des Werkstücks in der Maschine, Berechnung eines zulässigen Vorschubwertes und Rückführung desselben in die Maschinensteuerung, gekennzeichnet durch ein Meisterritzel (MR) für eine Zweiflankenwalzprüfung des Werkstücks (W) und rotatorische sowie translatorische Meßgeräte (MROT und MTRA) zur Messung der rotatorischen und translatorischen Abweichungen ΔR und ΔT für die Ermittlung der effektiven Abschliffbeträge.

8. Vorrichtung nach Anspruch 7, gekennzeichnet durch Leuchtdioden für die visuelle Anzeige der jeweils ermittelten Abschliffbeträge.

## Claims

1. Method of avoiding thermal overstressing of gears and like workpieces having profiles similar to gears, such as for example screw-type compressor rotors, during grinding (overheating during grinding), wherein before the grinding process is carried out in the grinding machine a profile check is made by means of a probe element on the workpiece which is to be machined, the result of said test being converted into an effective maximum grinding allowance, characterized in that on the basis of a permissible relative material removal rate of the grinding tool the maximum grinding allowance determined is used to calculate a permissible value for the feed of the grinding tool and this value is entered into the machine control system.

2. Method according to Claim 1, characterized in that when the grinding process is divided, for example into a rough machining and a finish machining process, the profile testing with the probe element is carried out after the first process (rough machining process) and before the last process (finish grinding) and the magnitude of the removal volume remaining for the last process is determined by evaluation of said test, while in the event of too great a removal volume remaining for the finish machining process the feed for the finish grinding is reduced.

3. Method according to Claim 1, characterized in that the effective grinding allowance obtained and calculated by the profile test is determined separately for every profile space which is to be machined and is stored in a computer, and in that on the basis of the permissible relative material removal rate of the grinding tool, the effective grinding allowances determined in each profile space a permissible value for the feed of the grinding tool in the grinding of that profile space are used to calculate and these values are entered into the machine control system.

4. Method according to at least one of Claims 1 to 3, characterized in that the probe element used for the profile test is a mechanical measuring probe, an optical measuring element or an inductively operating measuring instrument, such as is for example also used in the allowance determination (stock dividing) preceding this process.

5. Method according to one of Claims 1 to 3, caracterized in that the probe element used for the profile test is a master pinion appertaining to the workpiece to be machined and determining the effective grinding allowance by a running check with a master pinion having no back-lash.

6. Method according to Claim 4, characterized in that in the case of allowance determination (stock dividing) preceding the grinding process the measurements thereby made are used to calculate the effective grinding allowance which is to be removed.

7. Apparatus for avoiding thermal overstressing of gears and like workpieces having profiles similar to gears, such as for example screw-type compressor rotors, during grinding (overheating during grinding), by determining the volume of material to be removed from the workpiece in the machine, calculation of a permissible feed value and feedback thereof to the machine control system, characterized by a master pinion (MR) for a running check on the workpiece (W) with a master pinion having no back-lash and by rotational and translational measuring instruments (MROT and MTRA) for measuring the rotational and translational deviations ΔR and ΔT for the determination of the effective removal volumes.

8. Apparatus according to Claim 7, characterized by light-emitting diodes for visual indication of the removal volumes determined in each particular case.

## Revendications

1. Méthode pour éviter des surcharges thermiques sur des roues dentées et des pièces similaires à profil semblable à une roue dentée, comme par exemple des rotors de compresseurs à vis, lors du meulage (surchauffe de meulage), un contrôle de profil étant effectué dans la machine à meuler sur la pièce à meuler, avant la réalisation du processus de meulage, au moyen d'un organe palpeur, et le résultat de ce contrôle de profil étant converti en une surépaisseur de meulage effective maximale, caractérisée en ce que, sur la base d'un taux spécifique admissible d'enlèvement de copeaux de l'outil de meulage, on calcule, à l'aide de la surépaisseur de meulage maximale obtenue, une valeur admissible pour l'avance de l'outil de meulage et on l'affecte au dispositif de commande de la machine.

2. Méthode selon la revendication 1, caractérisée en ce qu'en cas de fractionnement du processus de meulage, par exemple en une opération de dégrossissage et en une opération de finissage, le contrôle de profil est réalisé à l'aide de l'organe palpeur après l'exécution de la première opération (opération de dégrossissage) et avant la dernière opération (meulage de finition), et l'analyse des résultats de ce contrôle permet de connaître l'épaisseur d'enlèvement restant avant la dernière opération, l'avance adoptée pour le meulage de finition étant réduite si l'épaisseur d'enlèvement restant pour l'opération de finissage est trop grande.

3. Méthode selon la revendication 1, caractérisée en ce que la surépaisseur de meulage effective obtenue et calculée grâce au contrôle de profil est déterminée séparément pour chaque entre-dent de profil à usiner et mémorisée dans un ordinateur, et en ce que, sur la base du taux spécifique admissible d'enlèvement de copeaux de l'outil de meulage, on calcule, à l'aide des surépaisseurs de meulage effectives déterminées dans chaque entre-dent du profil, une valeur admissible d'avance de l'outil de meulage pour le meulage de cette entre-dent de profil et on affecte ces valeurs au dispositif de commande de la machine.

4. Méthode selon au moins une des revendications 1 à 3, caractérisée en ce que l'organe palpeur utilisé pour le contrôle de profil est un palpeur de mesure mécanique, un élément de mesure optique ou un organe de mesure fonctionnant par induction, tels que ceux employés par exemple lors d'une répartition de surépaisseur (« stock dividing ») effectuée préalablement à la présente méthode.

5. Méthode selon l'une des revendications 1 à 3, caractérisée en ce que l'organe palpeur utilisé pour le contrôle de profil est un pignon étalon qui correspond à la pièce à usiner et qui permet de déterminer la surépaisseur de meulage effective par un contrôle d'engrènement sur deux flancs.

6. Méthode selon la revendication 4, caractérisée en ce que, si une répartition de surépaisseur (〈〈 stock dividing 〉〉) est effectuée avant le processus de meulage, les valeurs de mesure ainsi recueillies sont utilisées pour calculer la surépaisseur de meulage qui doit effectivement être retirée.

7. Dispositif pour éviter des surcharges thermiques sur des roues dentées ou des pièces similaires à profil semblable à une roue dentée, par exemple des rotors de compresseurs à vis, lors du meulage (surchauffe de meulage), en déterminant une épaisseur d'enlèvement de la pièce dans la machine, en calculant une valeur d'avance admissible et en réintroduisant celle-ci dans le dispositif de commande de la machine, caractérisé par un pignon étalon (MR) pour effectuer un contrôle d'engrènement sur deux flancs de la pièce (W) et par des appareils de mesure en rotation ainsi qu'en translation (MROT et MTRA) pour mesurer les écarts en rotation et en translation ΔR et ΔT afin de déterminer les épaisseurs d'enlèvement effectives.

8. Dispositif selon la revendication 7, caractérisé par des diodes luminescentes pour indiquer visuellement les épaisseurs d'enlèvement respectivement observées.
